# EUROPEAN PATENT APPLICATION

(11) **EP 1 976 256 A2**
(43) Date of publication of application: **01.10.2008**
(21) Application number: 08251002.5
(22) Date of filing: 20.03.2008
(51) Int. Cl.: H04M 3/53

(54) **System and method for pushing multimedia messages to a communication device**

(30) Priority: 26.03.2007 US 691127
(71) Applicant: Intervoice Limited Partnership, Las Vegas, NV 89119 (US)
(72) Inventor: Pollock, Ruth Y., Didsbury M20 5AB (GB); Hudson, Kieron, Sale, Cheshire M33 4EG (GB)
(74) Representative: Jackson, Richard Eric

(57) **Abstract**

The present invention is directed to a system and method in which voicemail or other media messages together with their text transcriptions are sent as digital messages to the user's phone. In one embodiment, voicemail message is recorded remotely from a user's mobile device. The voicemail message is converted to both a text version and a digitized version. Both versions are then communicated to the user's device via a messaging channel. The user then can selectively retrieve either the text version for visual display or the digitized version fro audible presentation. If desired, the user can retrieve both versions concurrently.

## Description

### CROSS-REFERENCE TO RELATED APPLICATIONS

This application is related to co-pending U.S. Patent Application Serial Number 11/349,051, entitled SYSTEM AND METHOD FOR PROVIDING MESSAGES TO A MOBILE DEVICE, filed February 7, 2006, the disclosure of which is hereby incorporated herein by reference.

### TECHNICAL FIELD

This disclosure relates to mobile communications and more particularly to systems and methods for delivering multimedia messages to a communication device.

### BACKGROUND OF THE INVENTION

It is now customary for a calling party to leave a voicemail when the called party does not answer. When the called user returns to his/her telephone or other communication device, (or when the called user desires to obtain the message) that user must call a voicemail system to retrieve the voicemail messages. In some situations, such as with mobile devices, a called user can receive a text transcription of a voicemail message, using, for example, the SMS service or email. However, the user must still call into a voicemail system to listen to the audio message.

In other situations it is desirable to send multimedia information to a user at a communication device, such as, for example, at a cellular telephone. This multimedia data could be, for example, sound coupled with a text or images. One example of such a situation would be when the user desires to obtain music and the music has associated with it, text (such as the title, artist, etc) or has with it an album cover or other graphic. In such situations the user must establish an outbound connection to some remote location (typically a server) to obtain the desired media.

### BRIEF SUMMARY OF THE INVENTION

The present invention is directed to a system and method in which voicemail or other media messages together with a text transcription of the message (or other associated material) is sent as digital messages to the user's phone. In one embodiment, a voicemail message is recorded remotely from a user's mobile device. The voicemail message is converted to both a text version and a digitized version of the audio message. Both versions are then communicated to the user's device via a messaging channel. The user then can selectively retrieve either the text version for visual display or the digitized version for audible presentation or both concurrently. In one embodiment, only the text version is sent to the user's device and the device then can reconvert the text message to an audio format so that the user can both read and hear the message all without requiring the user to establish an outbound calling connection from the user's device,.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:

FIGURE 1 shows one aspect of a prior art system for delivering audio messages to a mobile device;

FIGURE 2 shows one embodiment of a system for allowing mobile device user to receive mixed media messages without calling into a stored database to retrieve the message;

FIGURE 3 shows one embodiment of a method for delivering audio messages to a mobile device; and

FIGURE 4 shows one embodiment of a method for controlling the delivery of mixed media messages at a mobile device.

### DETAILED DESCRIPTION OF THE INVENTION

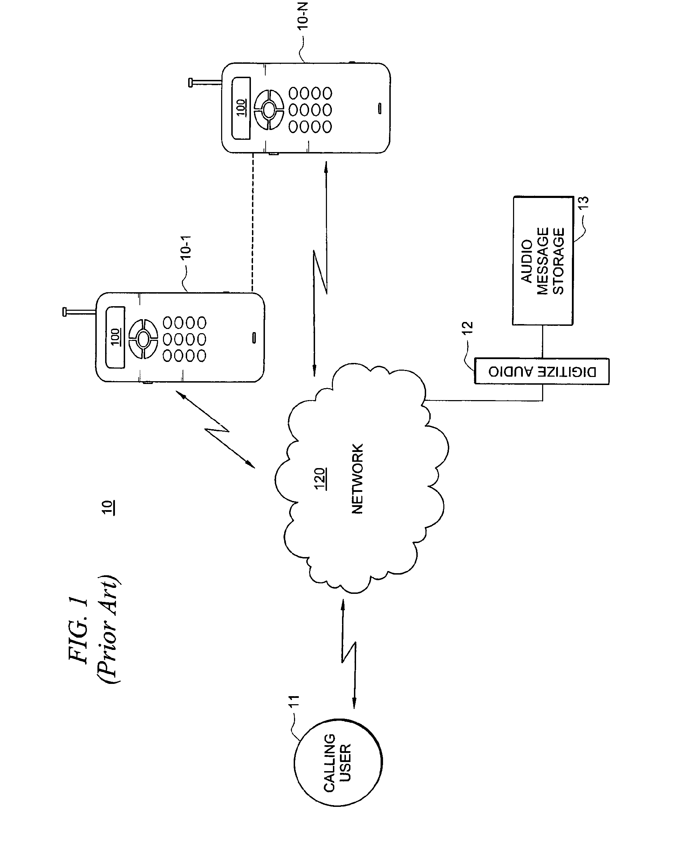

FIGURE 1 shows one aspect of a prior art system, such as system 10 for delivering audio messages to a mobile device. As shown in FIGURE 1, a calling user, such as user 11 calls a mobile device, such as device 10-1. The call is routed through one or more networks 120 and upon a determination that device 10-1 is busy, or that the user at device 10-1 does not answer the call, the network will allow the calling user to leave an audio message for the called user. This message is typically converted to digital format (A/D conversion), for example by device 12 and the digitized version of the audio voice-mail message is stored in memory, such as audio message store 13. The system sends a message to device 10-1 that a voice-mail message is available for retrieval by the user.

When the user desires to listen to the message, the user places an outbound call from device 10-1 to audio storage 13 in order to retrieve the message.

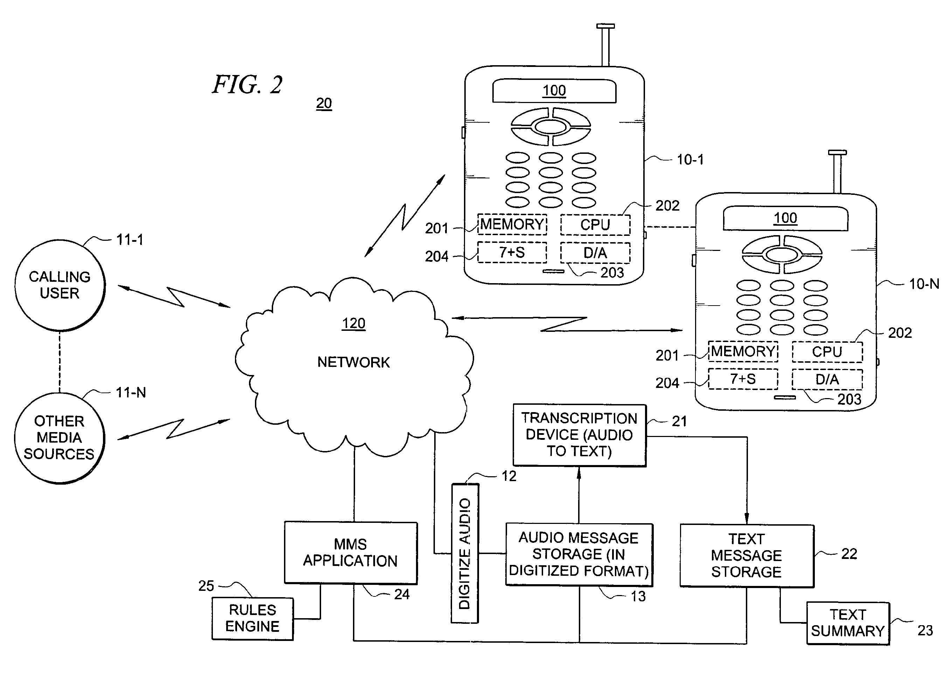

FIGURE 2 shows one embodiment of a system, such as system 20, for allowing the mobile device user to receive mixed media messages without calling into a stored database to retrieve the message. In operation, when the voice-mail message (or any message from a media source, such as from media source 11-N) is stored in storage 13 in digitized form, a conversion device, such as audio to text transcription device 21, converts the stored media into a text (or image format) suitable for displaying on a screen of the user's device. For example, music lyrics (or music titles) may be converted or retrieved from the stored message. These converted forms of the message are then stored as a text message, for example in text message store 22. Note that in some applications, these processes may be performed live and thus one or both of stores 13 and 22 need not be used. Note also that in some embodiments it might be desirable to summarize the text message using, for example text summary device 23. Also, while multiple storage devices are illustrated, these can be combined into the same database of which there could be many.

When, as will be discussed hereinafter, it is time to deliver the message to the user, multimedia messaging service (MMS) 24 sends the converted message and if desired the digitized version of the original message via the messaging channel of device 10-1. Note that as will be discussed, this message can be sent under control of MMS application 24 (pushed) or application 24 can send the message upon command of device 10-1, or under a combination of both. In any event, at some point in time the voice-mail message will reside in memory on device 10-1 and thus when the user desires to listen to (or read) the message it is not then necessary for the user to make an outbound calling connection to retrieve the message.

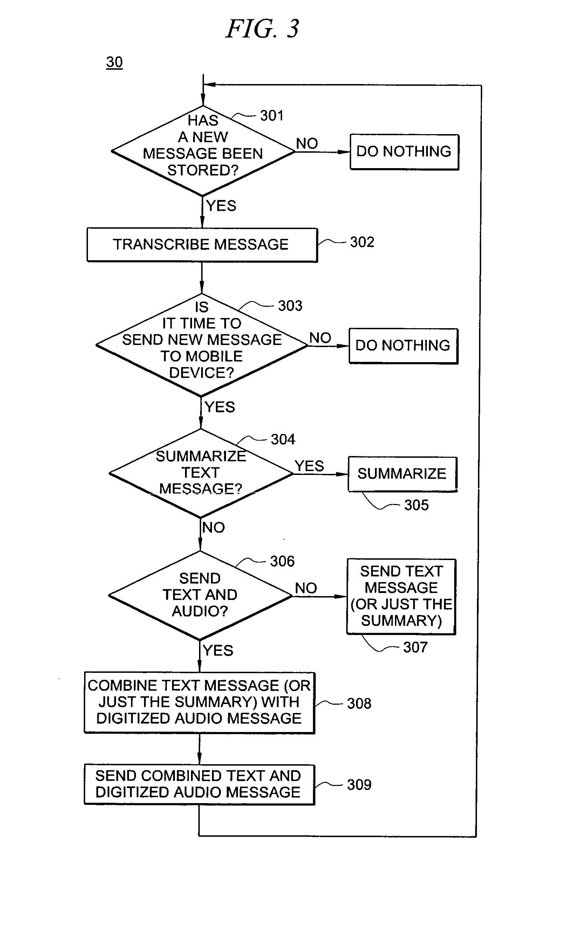

FIGURE 3 shows one embodiment 30 of a method for delivering audio messages to a mobile device. Process 301 determines if a new message has been delivered for storage. As discussed, this message would typically be a voice-mail message resulting from a called user not answering the calling connection. However, the message can be a broadcast message to a number of identified (and in some cases not identified) users. The message can arrive from any number of sources, such as, for example, calling telephones, computers, mass-mailing systems, media servers, and the like. The message can contain a relatively small amount of data, such as would typically result from a voice-mail message. Or the message can be a sophisticated multimedia message having a large amount of data. It is possible, for example as discussed above with respect to text summary 23 (FIGURE 2), to provide a reduced data file containing one or more summaries of the received message.

Process 302 transcribes the message (or at least part of the message) so as to convert the received message into displayable format. For example, in one embodiment an audio voice-mail message is first converted into digital format and then the digital representation of the audio message is converted into a text version that can be displayed on the screen of the called user's device. Note that in some situations the incoming message will arrive in digitized format and thus conversion is not necessary. Also note that in some situations the conversion to text (or to other displayable formats) can be accomplished directly from a message received in analog format.

Process 303 determines if it is time to send a newly received message to the user's device. This determination can be accomplished, for example, by rules engine 25, FIGURE 2, that establishes (perhaps on a user by user basis) the timing and other rules for sending messages to a device. These rules, for example, can depended upon the size of the message, the time of day, the location of the device, the on/off status of the device, the user's preferences, the type of user device, etc. The rules, under control of process 304, can also determine if a summary of the message is desired. For example, messages over a certain size, or containing a certain type of media, will be summarized by process 305.

Process 306 determines, for example under control of rules engine 25, if both text and audio is to be sent to the user's device. The determination can be based on file size, type of media, user preference, location or type of the device, etc. In some situations it may be desirable to have the user's device convert a text file (that had originally been converted from a received audio message) back into an audio message, thereby saving the bandwidth and memory required if both the text version and the digitized audio version of the same message were to be delivered to the user's device.

Process 307 sends the text message and the summary, it available, or just sends the summary, depending upon the rule that applies. Process 308, when appropriate, sends both the digitized version of the audio message as well as the text message and, if available the summary of the audio message derived from the audio message. Again, if desired, only the text summary can be sent if desired.

Process 309 controls the transmission of the messages over a messaging channel to the device, for example as a SMS message. Any messaging format can be used and the digitized version of the audio message and the converted text version can be combined into a single message for delivery to the device or they can be sent separately. The messaging channel is typically separate from the main communication channel thereby allowing messages to be delivered even while the main communication channel is otherwise busy. In some situations it may be advantageous to send the voice-mail messages to the device over the communication channel when that channel is not otherwise occupied. The object being to deliver voice-mail messages, or at least summarized versions of received voice-mail messages, to the device without requiring the user to place an outbound call to receive the message.

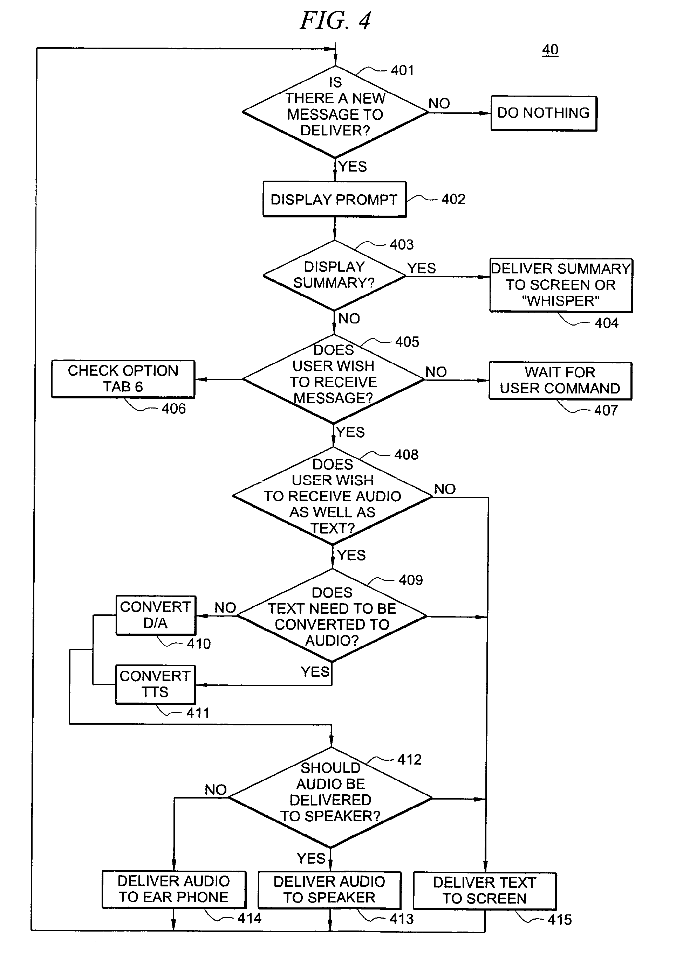

FIGURE 4 shows one embodiment 40 of a method for controlling the delivery of mixed media messages at a mobile device. Embodiment 40 would be resident at the user's device, for example at mobile device 10-1 (FIGURE 2) and would typically be controlled by an application specific integrated circuit (ASIC) or by code, for example code stored in memory 201 all running under control of CPU 202.

Process 401 determines if there is a new message to deliver. This can, for example, be as a result of a message downloaded from the network that a message has been received from a calling user. The notification can occur because a digital message has actually been received at the device, either over the communication channel, or advantageously over the messaging channel.

Process 402 displays a prompt to the user. This prompt can be on display 100 of the device or could be by a whisper message, as discussed in the above-identified co-pending application. The prompt can be as simple as, "A voice-mail message has arrived". Or the prompt can display (or whisper) the summary of the message if a summary has been provided, as shown by processes 403 and 404.

Processes 405 and 408, operating from instructions provided by the user, either verbally, or by key command (process 407), or even by rules engine (process 406) if desired, determine when the user desires to hear or see (or both) the message. When the message is to be displayed the user determines whether the full message is to be displayed or whether just a portion, for example, the summary, of the message is to be displayed. By way of example, the user might wish to listen to the message but to view an attachment to the message. Such an attachment could be, by way of example, the label artwork of a song being played.

Process 409 determines if the original audio has been sent together with the display version of the message. If it has then digital to analog conversion occurs via process 410 so that the audio can be played on a transducer so that the user can listen to the audio message and reconverted from the digitized version of the original message. If only the text version has been received then the text version is converted, for example by text to speech converter 204, FIGURE 2, as shown by process 411.

Process 412 determines, either by rules engine or by user command, whether to deliver the audio message to the device speaker (process 413) or to an earphone (process 414). Process 415 controls the display of the text (or other graphic) message onto the screen of the user's device. As noted above, the displayed portion can be the whole message, a summary of the message or an attachment to the message. The displayed message could even be another piece of data retrieved from some other source that is keyed to the audio message, perhaps by a link associated with the audio message.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A system for delivering messages, said system comprising:
a memory for storing therein messages containing at least a portion of the message having media content other than text, said stored messages for subsequent delivery to an identified user;
a processor for converting said media content of said message from its original format to an image format; and
message control circuitry for sending said image format of said message to an identified user associated with said message without request from said user.

2. The system of claim 1 wherein said message control circuitry utilizes a messaging channel separate from a main communication channel.

3. The system of claim 2 wherein said message control circuitry is further operable for sending said image format to said identified user together with a digitized version of said media content of said message, said digitized version convertible by a device associated with said user to said original format for delivery to said user.

4. The system of claim 3 wherein said original format of said media is audio and wherein said image format is a textual version of said audio, said textual version capable of being visually displayed to said user and said audio format being capable of audible delivery to said user.

5. The system of claim 4 wherein said device is a mobile phone.

6. The system of claim 3 wherein said messaging channel is an SMS channel.

7. The system of claim 1 wherein said device comprises:
circuitry for controlling the conversion of at least a portion of said image format to an audible message.

8. Machine controllable code for use on a communication device, said code operable to perform the method of:
accepting into memory a data message containing a textual version of an audio message as well as a digitized file of audio content of said message, said memory residing on said communication device; and
allowing said user to selectively enable said textual version and said audio content of said file, said textual version being displayed on a display of said device and said audio content being delivered by a sound transducer associated with said device.

9. The code of claim 8 wherein said accepting further comprises:
controlling a messaging channel to receive said data message.

10. The code of claim 8 wherein said communication device is a cellular telephone.

11. The code of claim 8 wherein said messages originate as a voice-mail message directed by a calling party to said user.

12. A method of operating a communication device, said method comprising:
accepting into memory a data message containing a textual version of an audio message, said audio message being a voice-mail message delivered to a system remote from said communication device, and
controlling a display on said communication device of at least a portion of said textual version of said audio message.

13. The method of claim 12 further comprising:
controlling delivery of said audio message to an audio transducer of said communication device concurrent with said display to said user of said textual message.

14. The method of claim 13 wherein said data message is accepted on a data channel separate from a main communication channel.

15. The method of claim 14 wherein said communication device is a cellular telephone.

16. A system for delivering messages to a mobile device user, said system comprising:
means for delivering a text version of an audio voice-mail message to said user's mobile device; and
means for delivering said voice-mail message to said user's mobile device concurrently with said text version without requiring said user to place an outbound call to obtain said voice-mail message.

17. The system of claim 16 wherein said text version delivering means comprises a messaging channel of said mobile device.

18. The system of claim 17 wherein said voice-mail message is delivered to said mobile device as a digital representation of said audio voice-mail message via said messaging channel.

19. The system of claim 17 wherein said voice-mail message is delivered to said mobile device as a conversion from said text version.

20. A method for delivering messages to a mobile device user, said method comprising:
delivering a text version of an audio voice-mail message to said user's mobile device; and
delivering said voice-mail message to said user's mobile device concurrently with said text version without requiring said user to place an outbound call to obtain said voice-mail message.

21. The system of claim 20 wherein said text version delivering comprises a messaging channel of said mobile device.

22. The system of claim 21 wherein said voice-mail message is delivered to said mobile device as a digital representation of said audio voice-mail message via said messaging channel.

23. The system of claim 22 wherein said text version and said digital representation are contained in at least one SMS message.

24. A mobile device comprising:
at least one speaker;
at least one communication channel for allowing bi-directional communication between a user of said mobile device and a remote device;
at least one messaging channel independent from said communication channel for receiving both a text version of a voice-message and a digitized version of said voice-message;
conversion circuitry for converting said digitized version of said voice-message to an audio version; and
processor control for controlling a presentation of said text version and an audio version of said text message to said user at said device, said text version being displayed visually and said converted audio version being played aurally.

25. The device of claim 24 wherein said text version and said converted version are presented concurrently.

26. The device of claim 24 wherein said device is a cellular telephone.

27. The device of claim 24 wherein said messaging channel uses SMS protocol.

28. A method of providing audio voice-mail messages to a mobile telephone user, said method comprising:
sending a message to a mobile telephone device associated with said user, said message containing at least image data corresponding to an audio file stored remotely for said user; and
storing, at least temporarily, said image data at said mobile telephone.

29. The method of claim 28 further comprising:
communicating stored ones of said image data to said user at said device, said communication being a visual display of said image data; and
aurally presenting to said user audio content associated with said image data, said presenting being concurrent with said communicating of said image data, said aural presentation being without requiring a communication between said user and said remotely stored file separate from sent ones of said messages.

30. The method of claim 29 wherein said sending comprises sending both said image data corresponding to said audio file and a digitized version of said audio file.
